(19) Europäisches Patentamt
European Patent Office
Office européen des brevets

(11) Veröffentlichungsnummer: **0 098 929**
**B1**

(12) # EUROPÄISCHE PATENTSCHRIFT

(45) Veröffentlichungstag der Patentschrift: **05.02.86**

(51) Int. Cl.⁴: **C 08 G 65/44**

(21) Anmeldenummer: **83104423.5**

(22) Anmeldetag: **05.05.83**

(54) **Verfahren zur Herstellung von Polyphenylenoxiden.**

(30) Priorität: **02.07.82 DE 3224692**

(43) Veröffentlichungstag der Anmeldung: **25.01.84 Patentblatt 84/4**

(45) Bekanntmachung des Hinweises auf die Patenterteilung: **05.02.86 Patentblatt 86/6**

(84) Benannte Vertragsstaaten: **AT BE DE FR GB IT NL SE**

(56) Entgegenhaltungen:
**EP-A-0 047 428**
**EP-A-0 071 081**
**DD-A-108 564**
**DE-A-1 668 868**
**DE-A-2 228 071**
**DE-B-1 595 046**

(73) Patentinhaber: **HÜLS AKTIENGESELLSCHAFT, Patentabteilung / PB 15 - Postfach 13 20, D-4370 Marl 1 (DE)**

(72) Erfinder: **Burzin, Klaus, Dr., Wellerfeldweg 164, D-4370 Marl (DE)**
Erfinder: **Bartmann, Martin, Dr., Burgstrasse 35, D-4350 Recklinghausen (DE)**
Erfinder: **Bax, Hanns-Jörg, Dr., Lipper Weg 193, D-4370 Marl (DE)**
Erfinder: **Ribbing, Wilfried, Dr., Heesternweg 20, D-4270 Dorsten 12 (DE)**

**EP 0 098 929 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der Erfindung ist ein Verfahren zur Herstellung hochmolekularer Polyphenylenoxide (PPO) durch oxidative Kupplung eines diorthosubstituiertcn Phenols in Gegenwart eines Katalysatorkomplexes aus einem Kupfersalz und einem Amin sowie eines Aktivators aus dem Hydrobromid des Morpholins und Alkali.

PPO und Verfahren zu ihrer Herstellung sind bekannt. Sie werden z. B. in Bühler 'Spezialplaste' (Akademieverlag Berlin 1978) sowie in den US-PSS 3 306 874 und 3 306 875 und der DE-AS 22 17 161 beschrieben.

Im industriellen Bereich haben sich die Verfahren durchgesetzt, bei denen diorthosubstituierte Phenole in Gegenwart von Sauerstoff durch einen Kupferaminkomplex oxidativ gekuppelt werden.

Hohe PPO-Molekulargewichte lassen sich mit dem Verfahren der DE-OS 24 46 425 erzielen. Trotzdem wird man in der Praxis dieses Verfahren vermeiden, da im Überdruckbereich gearbeitet werden muß. Dies hat einen erheblichen apparativen und sicherheitstechnischen Mehraufwand zur Folge.

Die DE-OS 25 30 827 offenbart einen Katalysator, der neben dem Kupferaminkomplex und dem metallischen Bromid ein quaternäres Ammoniumsalz

FIG01/10

bevorzugt Methyl-tri-n -octyl-ammoniumchlorid, enthält, wobei R ein Alkyl-, Alkenyl- oder Aralkylrest und X ein beliebiges Anion ist.

In der DE-OS 22 28 071 wird ein Verfahren zur Herstellung von PPO beschrieben, nach dem Phenole in Gegenwart eines Kupferaminkomplexes und eines Metallbromids mit Sauerstoff behandelt werden. Während für Alkali- und Erdalkalibromide ein beschleunigender Effekt nachgewiesen wurde, 'scheinen nichtmetallische Bromide, z. B. Ammoniumbromid, keine Aktivatoren zu sein'.

Andererseits gibt es auch technische Verfahren, wie z. B. das der japanischen Patentschrift Sho-48-32793, bei denen anstelle eines Kupferaminkomplexes ein Katalysator aus

1. einem Kupfer(I)-salz,
2. einer alkalisch reagierenden Verbindung eines Alkali- oder Erdalkalielements, wie z. B. Lithiumcarbonat, Natriumhydroxid oder Kaliumacetat, und
3. einem Nitril, z. B. Propionitril oder Phthalodinitril

eingesetzt wird. Die Oxidation erfolgt mit Sauerstoff bzw. einem Gemisch aus Sauerstoff und Luft im Verhältnis 1: 1.

Die bisherigen Verfahren haben sich in der Praxis als noch nicht befriedigend erwiesen. Als Oxidationsmittel ist meist Sauerstoff erforderlich. Abgesehen von den höheren Kosten, mit denen die Verwendung von Sauerstoff etwa im Vergleich zu Luft verbunden ist, beinhaltet der Einsatz von reinem Sauerstoff auch ein erhöhtes Sicherheitsrisiko. Es wird vielfach Benzol oder ein chlorhaltiges Lösungsmittel, wie z. B. Trichlorethylen, eingesetzt. Aufgrund ihrer möglichen krebserregenden Wirkung sind aber gerade diese Lösemittel zu vermeiden.

Die Reaktionszeit soll unter zwei Stunden liegen, um eine wirtschaftliche Fahrweise zu gewährleisten. Außerdem kommt es bei längeren Reaktionszeiten sehr leicht zur Bildung von Nebenprodukten, die sich durch die Verfärbung der Reaktionsmischung störend bemerkbar machen.

Schließlich ist man auch an einem hohen Polymerisationsgrad interessiert. Für die Herstellung von Fäden, Fasern, Überzügen und anderer Erzeugnisse ist ein Polymerisationsgrad von 100 erforderlich (vgl. DE-PS 20 12 443), wünschenswert ist ein Polymerisationsgrad von 250, damit eine spätere Preßverformung vollauf gewährleistet ist; dies entspricht einem J-Wert von 50, d. h. die konzentrationsbezogene relative Viskositätsänderung einer 0,5 %igen Lösung des Reaktionsproduktes in Chloroform bei 25°C liegt über 50 ml/g.

Es wurde jetzt ein Verfahren gefunden, mit dem die beschriebenen Anforderungen nicht nur erreicht, sondern sogar übertroffen werden können. Dieses Verfahren beruht darauf, daß als Aktivator in festgelegten Mengen Morpholiniumbromid und die wäßrige Lösung bzw. Suspension eines Alkali- oder Erdalkalihydroxids eingesetzt werden. Grundsätzlich solldas Hydroxid gegenüber dem Morpholiniumbromid im Überschuß eingesetzt werden. Die alkalische Lösung soll 20 bis 60 %, vorzugsweise 30 bis 50 %, Metallhydroxid enthalten. Dementsprechend kommen auf 100 Mole Phenol 1 bis 25, vorzugsweise 2 bis 10, Mole (Erd)Alkalihydroxid und 0, 1 bis 20, vorzugsweise 1 bis 7, Mole Morpholiniumbromid.

Das Verfahren gemäß dieser Erfindung zeichnet sich vor allem durch folgende Vorteile aus:

1. Es kann Luft anstelle von Sauerstoff als Oxidationsmittel eingesetzt werden.
2. Unter sonst gleichen Bedingungen ergibt das hier beschriebene Verfahren entweder kürzere Reaktionszeiten oder höhere Polymerisationsgrade. Die besten Ergebnisse erhält man mit 2, 6-Dimethylphenol.
3. Lösungsmittel mit einem Gefahrenrisiko lassen sich umgehen.

Das erfindungsgemäße Verfahren läßt sich wahlweise mit Sauerstoff, Sauerstoff-Luft- oder Stickstoff-Luft-Gemischen durchführen, sofern gewährleistet ist, daß das Gasgemisch wenigstens 10 % Sauerstoff enthält. Man kann zwar mit Luftgemischen, in denen Sauerstoff angereichert ist, noch bessere PPO-Qualitäten in kürzerer Zeit erreichen, gleichzeitig muß man aber höhere Sicherheitsaufwendungen in Kauf nehmen.

Für den Kupferamin-Katalysator werden, wie bekannt, ein Kupfer(I)oder ein Kupfer(II)-Salz und ein primäres, sekundäres oder tertiäres Amin

verwendet.

Beispiele für geeignete Kupfersalze sind Kupfer(I)-chlorid, Kupfer(I)acetat, Kupfer(II) -chlorid, Kupfer(II) -acetat, Kupfer(II) -sulfat, Kupfer(II)-carbonat und Kupfer(II) -bromid.

Geeignete Amine sind Butylamin, Dibutylamin, Dimethylamin, Pyridin und andere derartige Amine. Bevorzugt wird Morpholin eingesetzt.

Da Kupfer im Endprodukt stört, wird die Konzentration des Kupferamin-Katalysators möglichst niedrig gehalten, vorzugsweise im Bereich von 0,1 bis 2,5 Mol pro 100 Mol Phenol.

Geeignete Katalysatoren enthalten neben Morpholiniumbromid eine 20 bis 60%ige wäßrige Lösungbzw. Suspension eines Alkali- oder Erdalkalihydroxids, wie z. B. Natrium-, Kalium-, Calcium- oder Bariumhydroxid.

Als diorthosubstituierte Phenole werden 2, 6-Diphenylphenol, bevorzugt aber 2,6-Di-n-alkylphenole, deren Alkylrest 1 bis 6 C-Atome aufweist, eingesetzt.

Die höchsten Polymerisationsgrade wurden mit 2,6-Dimethylphenol erhalten. Geringfügige Mengen an Verunreinigungen, die durch die Herstellung der Phenole bedingt sind, stören nicht. Üblicherweise geht man von Reaktionslösungen aus, die 5 bis 40 Gewichtsprozent monomeres Phenol cnthalten.

Die Polymerisationsreaktion läuft bevorzugt in aromatischen Lösungsmitteln, wie z. B. Toluol, Xylol und o-Dichlorbenzol, ab. Die allgemeine Verfahrensweise zur Herstellung von PPO ist bekannt. Es hat sich bewährt, zunächst das Lösungsmittel vorzulegen, dann das Kupfersalz, Amin und Morpholiniumbromid zuzusetzen und schließlich eine Mischung aus wäßriger Hydroxidläsung und Phenol im Lösungsmittel zuzufügen.

Die Reaktion wird üblicherweise im Temperaturbereich zwischen 20 und 80°C durchgeführt; besonders günstig ist es, bei Temperaturen zwischen 30 und 40°C zu arbeiten.

Weitere Einzelheiten des erfindungsgemäßen Verfahrens gehen aus den Beispielen hervor.

Den Vergleichsversuchen ist zu entnehmen, daß weder allein mit Natriumhydroxid noch allein mit Natriumbromid befriedigende J-Werte erzielt werden. Auch mit einem Aktivator, der aus Natriumhydroxid und Natriumbromid besteht, erzielt man nicht die J-Werte, die erfindungsgemäß erhältlich sind.

**Beispiel 1**

In einem 2 1-Rührreaktor wurden 800 g Toluol, 2 g Kupfer(II)-chlorid, 200 g Morpholin und 5 g Morpholiniumbromid vermischt. Nach Zugabe von 100 g 2,6-Dimethylphenol, gelöst in 100 g Toluol und 4 g 50%iger wäßriger NaOH-Lösung wurde durch ein Tauchrohr ein Luftstrom von 200 l/h eingeleitet und die Polymerisation in Gang gesetzt.

Die Temperatur der Reaktionsmischung wurde zwischen 30 und 35°C gehalten. Nach 90 Minuten wurde die Reaktion durch Zugabe von 400 g 50 %iger Essigsäure gestoppt. Nach Phasentrennung wurde das Polymer aus dertoluolischen Phase durch Zugabe von 800 g Methanol gefällt.

Die konzentrationsbezogene relative Viskositätsänderung(J-Wert) des erhaltenen Polymeren wurde aus einer 0,5 %igen Lösung in Chloroform bei 25 °C bestimmt und ist in Tabelle 1 enthalten.

**Beispiele 2 bis 3 und A bis E**

Es wurde wie in Beispiel 1 verfahren, wobei lediglich der Aktivator verändert wurde. Die Ergebnisse sind in Tabelle 1 zusammengefaßt.

**Tabelle 1**

Die erfindungsgemäßen Beispiele sind durch Zahlen, die Vergleichsbeispiele durch Buchstaben gekennzeichnet.

| Bsp. | Aktivator | J-Wert ml/g |
|---|---|---|
| 1 | 5 g Morpholiniumbromid + 4 g NaOH (50 %ig) | 58 |
| 2 | 7,5 g Morpholiniumbromid + 4 g NaOH | 60 |
| 3 | 5 g Morpholiniumbromid + 4 g $Ca(OH)_2$ (33 %ig) | 56 |
| A | - | 35 |
| B | 9 g NaBr | 36 |
| C | 5 g Morpholiniumbromid | 44 |
| D | 9 g NaOH (50 %ig) | 40 |
| E | 4 g NaOH (50 %ig) + 5 g NaBr | 42 |

**Patentansprüche:**

1. Verfahren zur Herstellung hochmolekularer Polyphenylenoxide mit einerkonzentrationsbezogenen relativen Viskositätsänderung größer als 50 ml/g, gem essenin einer 0,5 %igen Lösung in Chloroform bei 25°C, durch oxidative Kupplung eines diorthosubstituierten Phenols der Formel

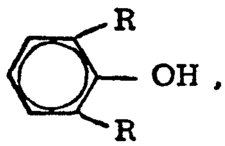

wobei R ein n-Alkylrest mit 1 bis 8 C-Atomen oder ein Phenylrest ist, in Gegenwart eines Kupferamin-Katalysators und eines Aktivators im Temperaturbereich zwischen 20 und 80° C,

dadurch gekennzeichnet,

daß man als Aktivator Morpholinium bromid und eine 20- bis 80 %ige Lösung bzw. Suspension eines Alkali- oder Erdalkalihydroxids einsetzt, wobei auf 100 Mole Phenol x Mole Hydroxid und y Mole Bromid kom men und die Bedingungen $1 < x < 25$; $0{,}1 < y < 20$ und $y < x$ gelten.

2. Verfahren zur Herstellung von Polyphenylenoxiden nach Anspruch 1,

dadurch gekennzeichnet,

daß man als Oxidationsmittel Lufteinsetzt.

3. Verfahren zur Herstellung von Polyphenylenoxiden nach Anspruch 1 oder 2,

dadurch gekennzeichnet,

daß man als A min des Kupferamin-Katalysators Morpholin einsetzt.

4. Verfahren zur Herstellung von Polyphenylenoxiden nach den Ansprüchen 1 bis 3,

dadurch gekennzeichnet,

daß man 2,8-Di-n-alkylphenole einsetzt, deren Alkylrestl bis 8 C-Atome aufweist.

5. Verfahren zur Herstellung von Polyphenylenoxiden nach Anspruch 4,

dadurch gekennzeichnet,

daß man 2,8-Dimethylphenol einsetzt.

6. Verfahren zur Herstellung von Polyphenylenoxiden nach den Ansprüchen 1 bis 5,

dadurch gekennzeichnet,

daß man

- zunächst das Lösemittel vorlegt,
- dann das Kupfersalz, Amin und Morpholinium bromid zusetzt und
- schließlich eine Mischung aus wäßriger Hydroxidlösung und Phenol im Lösemittel zufügt.

7. Verfahren zur Herstellung von Polyphenylenoxiden nach Anspruch 1,

dadurch gekennzeichnet,

daß die Bedingungen $2 < x < 10$ und $1 < y < 7$ gelten.

**Claims**

1. A process for the production of a high molecular weight polyphenylene oxide having a concentration-dependent relative viscosity change of more than 50 ml/g, measured at 25°C on a 0.5% solution in chloroform, by oxidation coupling of a di-ortho-substituted phenol of the formula

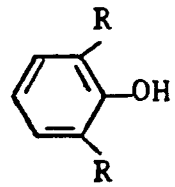

where R is n-alkyl of 1 to 6 carbon atoms or phenyl, at a temperature in the range from 20 to 80° C in the presence of a copper-amine catalyst and an activator, characterised in that morpholinium bromide and a 20 to 60% solution or suspension of an alkali metal hydroxide or alkaline earth metal hydroxide are used as activator, α moles of the hydroxide and y moles of the bromide being used per 100 moles of the phenol such that 1 < + < 25, 0.1 < y < 20 and y < +.

2. A process for the production of a polyphenylene oxide according to claim 1, characterised in that air is used as oxidising agent.

3. A process for the production of a polyphenylene oxide according to claim 1 or 2, characterised in that morpholine is used as the amine of the copper-amine catalyst.

4. A process for the production of a polyphenylene oxide according to any of claims 1 to 3, characterised in that a 2,6-di-n-alkylphenol having 1 to 6 carbon atoms in the alkyl radicals is used.

5. A process for production of a polyphenylene oxide according to claim 4, characterised in that 2,6-dimethylphenol is used.

6. A process for the production of a polyphenylene oxide according to any of claims 1 to 5, characterised in that the solvent is provided initially, then the copper salt, the amine and morpholinium bromide are added and finally a mixture of aqueous hydroxide solution and the phenol is added in the solvent.

7. A process for the production of a polyphenylene oxide according to claim 1, characterised in that 2 < + < 10 and 1 < y < 7.

**Revendications**

1. Procédé de préparation de poly-oxyphénylènes de poids moléculaire élevé, présentant une variation relative de viscosité, rapportée à la concentration, supérieure à 50 ml/g, mesurée dans une solution à 0,5 % dans le chloroforme à 25° C, par couplage par oxydation d'un phénol disubstitué en ortho,

de la formule

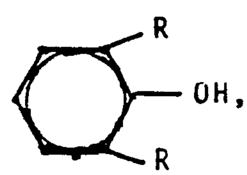

dans laquelle R est un radical n-alkyle contenant de l'à 6 atomes de carbone ou un radical phényle, en présence d'un catalyseur amine-cuivre et d'un activeur, dans l'intervalle de température compris entre 20 et 80° C, caractérisè par le fait que l'on utilise comme activeur le bromure de morpholinium et une solution ou suspension à 2060 % d'un hydroxyde alcalin ou alcalino-terreux, x moles d'hydroxyde et y moles de bromure étant utilisées par 100 moles de phénol et lex conditions $1 < x < 25$, $0,1 < y < 20$ et $y < x$ étant valables.

2. Procédé de préparation de poly-oxyphénylènes selon la revendication 1, caractèrisè par le fait qu'on utilise l'air comme oxydant.

3. Procédé de préparation de poly-oxyphénylènes selon la revendication 1 ou 2, caractèrisè par le fait que, comme amine du catalyseur aminecuivre, on utilise la morpholine.

4. Procédé de préparation de poly-oxyphénylènes selon les revendications 1 à 3, caractèrisè par le fait qu'on utilise des 2,6-bis-(n-alkyl)phénols dont le radical alkyle présente de 1 à 6 atomes de carbone.

5. Procédé de préparation de poly-oxyphénylènes selon la revendication 4, caractèrisè par le fait qu'on utilise le 2,6-diméthylphénol.

6. Procédé de préparation de poly-oxyphénylènes selon les revendications 1 ü 5, caractérisé par le fait

- que l'on place d'abord initialement le solvant,
- que l'on ajoute alors le sel de cuivre, l'amine et le bromure de morpholinium, et
- qu'on ajoute finalement un mélange d'une solution aqueuse d'hydroxyde alcalin ou alcalino-terreux et de phénol dans le solvant.

7. Procédé de préparation de poly-oxyphénylènes selon la revendication 1, caractèrisè par le fait que les conditions $2 < x < 10$ et $1 < y < 7$ sont valables.